Europäisches Patentamt

European Patent Office

Office européen des brevets

(19)

(11) Veröffentlichungsnummer : **0 048 908**
**B1**

(12) **EUROPÄISCHE PATENTSCHRIFT**

(45) Veröffentlichungstag der Patentschrift :
**15.05.85**

(21) Anmeldenummer : **81107412.9**

(22) Anmeldetag : **18.09.81**

(51) Int. Cl.⁴ : **E 21 B 10/38**, E 21 C 7/02,
E 21 B 10/44, E 21 B 10/58

(54) **Bohrer, insbesondere Drehschlagbohrer.**

(30) Priorität : **26.09.80 DE 8025800 U**

(43) Veröffentlichungstag der Anmeldung :
**07.04.82 Patentblatt 82/14**

(45) Bekanntmachung des Hinweises auf die Patenterteilung : **15.05.85 Patentblatt 85/20**

(84) Benannte Vertragsstaaten :
**CH DE FR LI SE**

(56) Entgegenhaltungen :
**DE-A- 2 350 985**
**DE-A- 2 417 228**
**DE-A- 2 756 140**
**DE-A- 2 807 197**
**DE-B- 1 217 903**
**US-A- 1 652 578**

(73) Patentinhaber : **Hawera Probst GmbH + Co.**
**Schützenstrasse 77**
**D-7980 Ravensburg (DE)**

(72) Erfinder : **Klaissle, Siegfried**
**Hegauweg 22**
**D-7981 Schlier/Unterankenreute (DE)**
Erfinder : **Moser, Bernhard**
**Ulrichstrasse 31**
**D-7963 Altshausen (DE)**

(74) Vertreter : **Jackisch, Walter, Dipl.-Ing. et al**
**Menzelstrasse 40**
**D-7000 Stuttgart 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 048 908 B1

## Beschreibung

Die Erfindung betrifft einen Bohrer, insbesondere einen Drehschlagbohrer, nach dem Oberbegriff des Anspruches 1.

Solche Bohrer werden meist als Gesteinsbohrer eingesetzt, wobei Bohrmehl und Staub durch die Absaugbohrung hindurch nach außen gefördert werden. Der die Eintrittsöffnung mit der Absaugbohrung verbindende Kanal hat einen geringeren Querschnitt als die Bohrung, um Stauungen und damit Verstopfungen in der Absaugbohrung zu vermeiden. Bei einem bekannten Bohrer dieser Art (DE-A-28 07 197) ist der Kanal als besondere Bohrung ausgeführt, die spitzwinklig zu der zur Bohrerachse koaxialen Absaugbohrung verläuft. Die Eintrittsöffnung liegt zum Teil in der konischen Stirnfläche und mit ihrem übrigen Teil in der Mantelfläche des Bohrkopfes, so daß ihr Querschnitt größer ist als der Durchtrittsquerschnitt der den Kanal bildenden Bohrung. Die spitzwinklige Einmündung des Kanales in die Absaugbohrung ergibt eine Querschnittsverminderung des Bohrers im Bereich des Bohrerkopfes, wodurch an dieser Stelle leicht ein Schaftbruch auftreten kann, der den Bohrer unbrauchbar macht. Auch können sich in der Eintrittsöffnung Gesteinspartikel festsetzen, weil der größte Durchmesser der Eintrittsöffnung größer ist als der Kanaldurchmesser. Bei der Herstellung dieses Bohrers ergeben sich Schwierigkeiten, weil die zentrale Absaugbohrung als Sackbohrung nur vom Einspannende des Schaftes aus ausgeführt werden kann; ein Bohrer mit einem Einspannschaft aus Vollmaterial könnte bei dieser Konstruktion nur zweiteilig ausgeführt werden, wobei die beiden Teile zusammengeschweißt werden müßten.

Bei einem anderen bekannten Bohrer (US-A-16 52 578) ist eine zentrale Wasserspülbohrung vorgesehen, die den Bohrerschaft in dessen Längsrichtung durchsetzt und zentral in die Stirnfläche des Bohrkopfes mündet. Eine solche Bohrung ist aber als Absaugbohrung bei Bohrer ungeeignet, bei denen der Bohrkopf eine die Längsachse des Bohrers schneidende und eine Schneidplatte aufnehmende Quernut aufweist. Die Bohrungsmündung würde in einem solchen Falle von der Schneidplatte verdeckt werden.

Ausgehend von dem eingangs erwähnten Stand der Technik liegt der Erfindung die Aufgabe zugrunde, den Bohrer konstruktiv derart auszubilden, daß seine Herstellung vereinfacht wird, ohne die Betriebssicherheit zu beeinträchtigen.

Diese Aufgabe wird bei dem gattungsgemäßen Bohrer erfindungsgemäß durch die kennzeichnenden Merkmale des Anspruches 1 gelöst.

Der geradlinige Verlauf der Absaugbohrung ermöglicht es, die Bohrung vom Bohrerkopf her auszuführen, wobei die Querschnittsverengung durch anschließendes Anstauchen des Bohrerkopfes, aber auch durch eine besondere Lage der Eintrittsöffnung gebildet sein kann, nämlich durch den Übergang in die Quernut des Bohrerkopfes, in welche die Schneidplatte einzusetzen ist. Diese Querschnittsverengung bildet die Eintrittsöffnung und damit gleichzeitig den Kanal geringeren Querschnitts im Übergangsbereich von der Absaugbohrung zur Eintrittsöffnung. Dadurch ist auch die lichte Weite der Eintrittsöffnung an keiner Stelle größer als der durchmesser der unmittelbar anschließenden Absaugbohrung, so daß ein Festsetzen von Gesteinspartikeln sicher vermieden wird. Infolge der geradlinigen Führung der Absaugbohrung wird auch die Strömung nicht umgelenkt, so daß keine Stauungen des Bohrmehls in der Absaugbohrung entstehen. Diese Wirkung wird durch die bereits im Bereich der Eintrittsöffnung vorhandene Querschnittsverengung noch unterstützt, da hierdurch in diesem Bereich eine erhöhte Strömungsgeschwindigkeit auftritt. Bei dem erfindungsgemäßen Bohrer sind darüber hinaus auch die eingangs geschilderten Nachteile und Schwierigkeiten beseitigt, wie sie sich aus der bekannten Konstruktion ergeben.

Weitere Merkmale des erfindungsgemäßen Bohrers sind in den Unteransprüchen gekennzeichnet und werden im folgenden anhand zweier Ausführungsformen beschrieben, die in den Zeichnungen dargestellt sind. Es zeigen

Figur 1   einen erfindungsgemäßen Bohrer in Seitenansicht, teilweise geschnitten,

Figur 2   eine Draufsicht auf das Kopfende des Bohrers nach Fig. 1,

Figur 3   eine andere Ausführungsform des Bohrers in Seitenansicht, teilweise geschnitten,

Figur 4   eine Draufsicht auf das Kopfende des Bohrers nach Fig. 3.

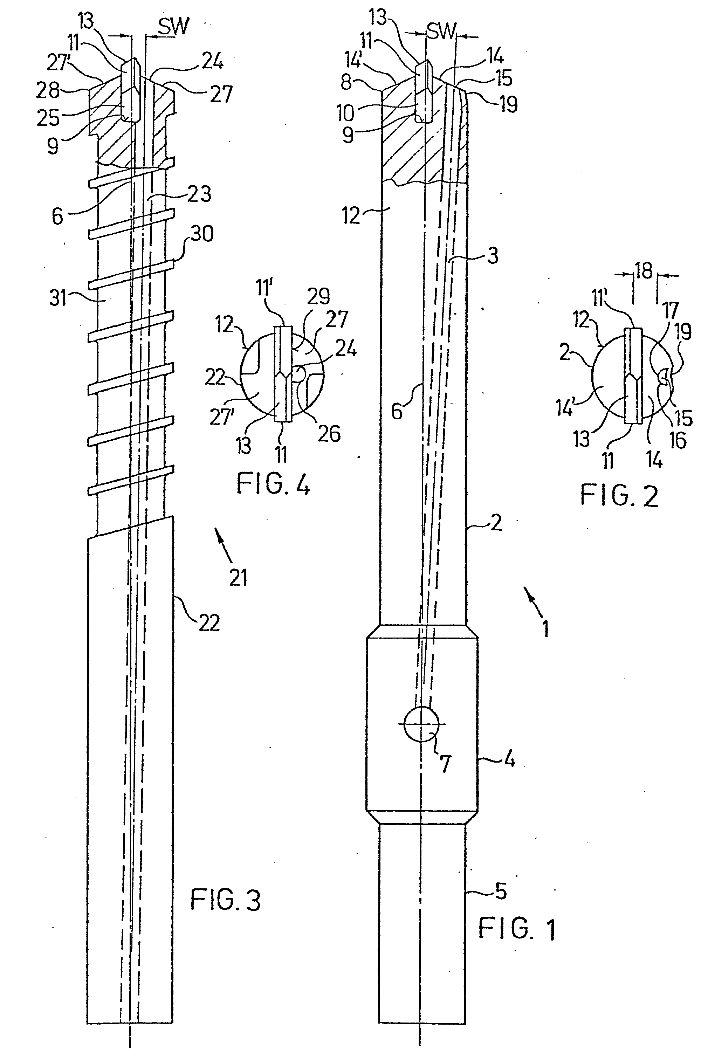

Der in den Fig. 1 und 2 dargestellte Bohrer 1 hat einen zylindrischen Schaft 2 mit einer zum Absaugen von Bohrmehl und Staub dienenden Absaugbohrung 3, einem im Durchmesser größeren Verstärkungsteil 4 und einem den hinteren Endbereich bildenden bohrungsfreien Vollschaftteil 5 zum Einspannen in ein Bohrfutter. Das innere Ende der Absaugbohrung 3 mündet in eine im Durchmesser etwas größere Sackbohrung 7, die rechtwinklig zur Längsmittelachse 6 des Schaftes 2 in den Verstärkungsteil 4 eingebracht ist. An dieser Querbohrung 7 wird während des Betriebes ein Sog zum Fördern des Bohrmehls durch die Absaugbohrung hindurch erzeugt. Das verdickte Teilstück 4 des Bohrers dient zum Aufsetzen einer Absaugmanschette.

Der von dem einen Schaftende gebildete Bohrkopf 8 hat eine zentrale, durchgehende Quernut 9, welche die kegelstumpfförmige Stirnfläche des Bohrers unterbricht und in zwei Kegelteilflächen 14 und 14' unterteilt. In die Quernut 9 ist eine im Querschnitt rechteckige Schneidplatte 10 eingesetzt, die mit Hartlot oder auf andere Weise befestigt sein kann. Die Schneidplatte 10 überragt mit ihren beiden Schmalen Längsseiten 11 und 11' die zylindrische Mantelfläche 12 des Schaftes 2. Das über die Stirnfläche 14, 14' überstehende Ende 13 der Schneidplatte 10 ist in üblicher Weise zugespitzt und angefast ; seine angeschärften Kanten bilden die Bohrschneiden.

Die im Bohrkopf 8 befindliche Mündung der Absaugbohrung 3 bildet eine Eintrittsöffnung 15, die mit ihrer Randbegrenzung 16 im Bereich der Kegelteilfläche 14 liegt. Bei der Herstellung des Bohrers 1 wird die Absaugbohrung 3 von dieser Stirnfläche aus in den Schaft 2 eingebracht. Sie verläuft einachsig geradlinig in einem spitzen Winkel SW zur Längsmittelachse 6 des Schaftes 2, so daß sich ein krümmungsfreier, strömungsgünstiger Absaugkanal ergibt. Die Bohrerachse 6 und die Achse der Saugbohrung 3 schneiden oder kreuzen einander in der Querbohrung 7, vorzugsweise in deren Achse (Fig. 1).

Die Eintrittsöffnung 15 der Absaugbohrung 3 ist zweckmäßig derart innerhalb der Kegelteilfläche 14 angeordnet, daß sie in Draufsicht auf die Stirnfläche 14, 14' symmetrisch zu der die Nut 9 senkrecht schneidenden Diagonalen liegt und ihr der Nut zugekehrter Randabschnitt 17 von der Längsmittellinie der Nut einen Abstand 18 hat, der etwas größer ist als die Nutbreite bzw. die Dicke der Schneidplatte 10 (Fig. 2).

Die Mündung der Absaugbohrung 3 ist im Querschnitt verengt, so daß durch die Eintrittsöffnung 15 nur solche Partikel hindurchtreten können, deren größter Durchmesser, quer zur Strömungsrichtung gemessen, kleiner ist als der Durchmesser der Absaugbohrung 3. Daher werden Verstopfungen vermieden. Auch ist die Strömungsgeschwindigkeit wegen des verringerten Eintrittsquerschnittes in diesem Bereich erhöht. Die Querschnittsverengung ist beim Ausführungsbeispiel nach den Fig. 1 und 2 durch eine Anstauchung 19 an der Mantelfläche des Bohrkopfes 8 erreicht, wodurch sich ein etwa halbmondförmiger Querschnitt der Eintrittsöffnung 15 ergibt.

In den Fig. 3 und 4 ist als weiteres Ausführungsbeispiel ein Bohrer 21 dargestellt, der eine Absaugbohrung 23 aufweist, die zur Bohrerachse 6 ebenfalls im spitzen Winkel SW verläuft ; der Winkel ist jedoch um einige Grade kleiner als der Winkel SW bei dem Bohrer nach Fig. 1, so daß der an den Bohrkopf 28 anschließende Schaftteil im Durchmesser reduziert und mit einer Außenförderwendel 30 versehen sein kann. Der Bohrer ist in diesem Fall wahlweise mit oder ohne Staubabsaugung verwendbar. Der Bohrkopf hat ebenfalls stirnseitige Kegelteilflächen 27 und 27', die jedoch je eine Ausnehmung für den Übergang in den Wendelkern 31 aufweisen. Der Bohrer hat die Absaugbohrung 23, die sich durch die gesamte Länge des Schaftes 22 erstreckt ; die Absaugbohrung könnte aber auch wie beim dem Bohrer nach Fig. 1 in eine Querbohrung münden. Im Ausführungsbeispiel schneiden die Bohrerachse 6 und die Achse der Absaugbohrung 23 einander in der unteren Stirnfläche des Schaftes 22, in welche die Absaugbohrung ausmündet. Infolge ihrer Winkellage zur Bohrerachse 6 liegt die Absaugbohrung 23 so nahe am Zentrum des Bohrerkopfes 28, daß sie zu der Nut 9 offen und im Mündungsbereich außer vom Bohrungsrand 26 von der eingesetzten Schneidplatte 25 begrenzt ist. Die Hartmetall-Schneidplatte 25 überdeckt also einen Teil des Querschnitts der Absaugborung 23. Die Querschnittsverengung der Bohrungsmündung und damit auch der in der Kegelteilfläche 27 des Bohrkopfes 28 liegenden Eintrittsöffnung 24 ist daher durch die Schneidplatte 25 gebildet, die mit ihrer einen Breitseite 29 im Mündungsbereich der Absaugbohrung 23 liegt. Auch hierbei ist die Eintrittsöffnung 24 im Kegelflächenteil 27 so ausgebildet bzw. angeordnet, daß sie symmetrisch zu der die Quernut 9 senkrecht schneidenden Diagonalen des Bohrkopfes 28 liegt (Fig. 4).

Der geradlinige Verlauf der Absaugbohrung 3 bzw. 23 hat den besonderen Vorteil, daß die Bohrung ohne wesentliche Schwächung des Bohrerquerschnittes ausgeführt werden kann, so daß auch Bohrer mit verhältnismäßig kleinem Durchmesser in der erfindungsgemäßen Weise ausgebildet sein können.

**Patentansprüche**

1. Bohrer, insbesondere Drehschlagbohrer, mit einem Bohrkopf (8, 28), der eine durch die Längsachse (6) des Bohrers verlaufende Quernut (9) aufweist, die eine Schneidplatte (10, 25) aufnimmt, und mit einer den Bohrerschaft (2) in dessen Längsrichtung mindestens teilweise durchsetzenden Absaugbohrung (3, 23), die über einen Kanal geringeren Querschnitts mit einer in der Außenfläche des Bohrkopfes liegenden Eintrittsöffnung (15, 24) in Verbindung steht, dadurch gekennzeichnet, daß die Eintrittsöffnung (15, 24) durch eine Querschnittsverengung der Mündung der geradlinig und spitzwinklig zur Bohrerachse (6) verlaufenden Absaugbohrung (3, 23) gebildet ist.

2. Bohrer nach Anspruch 1, dadurch gekennzeichnet, daß die Querschnittsverengung durch Anstauchen des Bohrkopfes (8) gebildet ist.

3. Bohrer nach Anspruch 1, dadurch gekennzeichnet, daß die Querschnittsverengung durch die Schneidplatte (25) bestimmt ist, die in die im Bohrkopf (28) vorgesehene Quernut (9) einsetzbar ist, zu der die Absaugbohrung (23) in ihrem Mündungsbereich offen ist.

4. Bohrer nach einem der Ansprüche 1 bis 3, dadurch gekennzeichnet, daß die Einsetzöffnung (15, 24) der Absaugbohrung (3, 23) vollständig in der kegelstumpfförmigen Stirnfläche (14, 14' ; 27, 27') des Bohrkopfes (8, 28) liegt.

5. Bohrer nach einem der Ansprüche 1 bis 4, dadurch gekennzeichnet, daß die Eintrittsöffnung (15, 24) der Absaugbohrung (3, 23) einen teilkreisförmigen Randabschnitt (17, 26) hat, der, in Draufsicht auf den Bohrkopf (8), axialsymmetrisch zu der die Quernut (9) senkrecht schneidenden Diagonalen des Bohrkopfes (8) verläuft.

6. Bohrer nach einem der Ansprüche 1 bis 5, dadurch gekennzeichnet, daß der in Höhe der Eintrittsöffnung (15, 24) gemessene Abstand zwischen der Bohrerachse (6) und der Achse der Absaugbohrung (3, 23) größer als deren Radius ist.

7. Bohrer nach einem der Ansprüche 1 bis 6, dadurch gekennzeichnet, daß die Absaugbohrung (3) in einer den Bohrerschaft (2) ganz oder teilweise durchsetzenden Querbohrung (7) endet.

8. Bohrer nach Anspruch 7, dadurch gekennzeichnet, daß die Bohrerachse (6) und die Achse der Absaugbohrung (3) einander innerhalb der Querbohrung (7) schneiden.

9. Bohrer nach Anspruch 7 oder 8, dadurch gekennzeichnet, daß der Bohrerschaft (2) im Bereich der Querbohrung (7) verdickt ist.

10. Bohrer nach einem der Ansprüche 7 bis 9, dadurch gekennzeichnet, daß die Querbohrung (7) einen größeren Durchmesser hat als die Absaugbohrung (3).

11. Bohrer nach einem der Ansprüche 1 bis 6, dadurch gekennzeichnet, daß die Absaugbohrung (23) den Bohrer (21) über dessen ganze Länge geradlinig durchsetzt und in der Stirnfläche des einspannseitigen zylindrischen Schaftendes etwa konzentrisch zur Bohrerachse endet.

12. Bohrer nach einem der Ansprüche 1 bis 11, dadurch gekennzeichnet, daß der Bohrerschaft (12) eine Außenförderwendel (30) aufweist.

13. Bohrer nach einem der Ansprüche 1 bis 12, dadurch gekennzeichnet, daß der Bohrkopf (8, 28) und der Bohrerschaft (2, 22) etwa gleiche Außendurchmesser haben.

14. Bohrer nach einem der Ansprüche 1 bis 13, bei dem die Stirnfläche (14, 14') des Bohrkopfes in einer Kegelmantelfläche liegt, dadurch gekennzeichnet, daß die Eintrittsöffnung (15) in der Nähe des äußeren Randes der Stirnfläche (14, 14') des Bohrkopfes (8) liegt.

## Claims

1. Drill, particularly rotary percussion drill, with a drilling head (8, 28) exhibiting a transverse groove (9) extending through the longitudinal axis (6) of the drill and containing a cutting plate (10, 25), and with an extraction bore (3, 23) at least partially penetrating the drill shank (2) in the longitudinal direction of the latter, said extraction bore being connected via a channel of smaller cross section to an inlet opening (15, 24) situated in the outer surface of the drilling head, wherein the inlet opening (15, 24) is formed by a contraction in cross section of the mouth of the extraction bore (3, 23), said extraction bore extending rectilinearly and at an acute angle to the drill axis (6).

2. Drill as defined in claim 1, wherein the contraction in cross section is formed by upsetting the drilling head (8).

3. Drill as defined in claim 1, wherein the contraction in cross section is determined by the cutting plate (25) which is insertable into the transverse groove (9) provided in the drilling head (28), whereby the extraction bore (23) is open in the region of its mouth with respect to said transverse groove (9).

4. Drill as defined in any one of claims 1 to 3, wherein the inlet opening (15, 24) of the extraction bore (3, 23) is situated entirely in the truncated conical end face (14, 14'; 27, 27') of the drilling head (8, 28).

5. Drill as defined in any one of claims 1 to 4, wherein the inlet opening (15, 24) of the extraction bore (3, 23) has a partially circular edge section (17, 26) which, in a top view of the drilling head (8), extends axially symmetrically with respect to the diagonal of the drilling head (8), said diagonal intersecting the transverse groove (9) vertically.

6. Drill as defined in any one of claims 1 to 5, wherein, as measured at the level of the inlet opening (15, 24), the distance between the drill axis (6) and the axis of the extraction bore (3, 23) is greater than the radius of the latter.

7. Drill as defined in any one of claims 1 to 6, wherein the extraction bore (3) terminates in a transverse bore (7) wholly or partially penetrating the drill shank (2).

8. Drill as defined in claim 7, wherein the drill axis (6) and the axis of the extraction bore (3) intersect each other within the transverse bore (7).

9. Drill as defined in claim 7 or 8, wherein the drill shank (2) is enlarged in the region of the transverse bore (7).

10. Drill as defined in any one of claims 7 to 9, wherein the transverse bore (7) has a larger diameter than the extraction bore (3).

11. Drill as defined in any one of claims 1 to 6, wherein the extraction bore (23) penetrates the drill (21) rectilinearly over the entire length of the latter and terminates in the end face of the cylindrical chucking end of the shank, more or less concentrically with respect to the drill axis.

12. Drill as defined in any one of claims 1 to 11, wherein the drill shank (12) exhibits an outer conveying helix (30).

13. Drill as defined in any one of claims 1 to 12, wherein the drilling head (8, 28) and the drill shank (2, 22) have approximately identical outer diameters.

14. Drill as defined in any one of claims 1 to 13, in which the end face (14, 14') of the drilling head is situated in a conical surface area, wherein the inlet opening (15) is situated in the vicinity of the outer edge of the end face (14, 14') of the drilling head (8).

## Revendications

1. Fleuret, notamment fleuret roto-percutant, comportant une tête de fleuret (8, 28) comportant une rainure transversale (9) passant par l'axe longitudinal (6) du fleuret, laquelle reçoit une plaquette de coupe (10, 25), et au moins un alésage d'aspiration (3, 23) traversant au moins partiellement la tige (2) du fleuret dans le sens longitudinal de celle-ci, lequel est relié par un canal de plus petite section transversale à un orifice d'entrée (15, 24) situé dans la surface extérieure de la tête de fleuret, caractérisé en ce que l'orifice d'entrée (15, 24) est formé par un rétrécissement de la section transversale de l'embouchure de l'alésage d'aspiration (3, 23) de tracé rectiligne et faisant un angle aigu avec l'axe (6) du fleuret.

2. Fleuret selon la revendication 1, caractérisé en ce que le rétrécissement de la section transversale est formé par refoulement de la tête (8) du fleuret.

3. Fleuret selon la revendication 1, caractérisé en ce que le rétrécissement de la section transversale est déterminé par la plaquette de coupe (25) qui peut être introduite dans la rainure transversale prévue dans la tête de fleuret (28), rainure vers laquelle l'alésage d'aspiration (23) est ouvert dans la zone de son embouchure.

4. Fleuret selon l'une des revendications 1 à 3, caractérisé en ce que l'orifice d'entrée (15, 24) de l'alésage d'aspiration (3, 23) se trouve complètement dans la surface frontale tronconique (14, 14' ; 27, 27') de la tête de fleuret (8, 28).

5. Fleuret selon l'une des revendications 1 à 4, caractérisé en ce que l'orifice d'entrée (15, 24) de l'alésage d'aspiration (3, 23) a une portion de bord (17, 26) en forme de cercle partiel qui, en vue de dessus sur la tête de fleuret (8), est symétrique par rapport à la diagonale de la tête de fleuret (8) coupant perpendiculairement la rainure transversale (9).

6. Fleuret selon l'une des revendications 1 à 5, caractérisé en ce que la distance, mesurée à la hauteur de l'orifice d'entrée (15, 24), entre l'axe de fleuret (6) et l'axe de l'alésage d'aspiration (3, 23) est supérieure au rayon de l'orifice.

7. Fleuret selon l'une des revendications 1 à 6, caractérisé en ce que l'alésage d'aspiration (3) se termine dans un alésage transversal (7) traversant totalement ou partiellement la tige de fleuret (2).

8. Fleuret selon la revendication 7, caractérisé en ce que l'axe de fleuret (6) et l'axe de l'alésage d'aspiration (3) se coupent à l'intérieur de l'alésage transversal (7).

9. Fleuret selon la revendication 7 ou 8, caractérisé en ce que la tige de fleuret (2) est épaissie dans la zone de l'alésage transversal (7).

10. Fleuret selon l'une des revendications 7 à 9, caractérisé en ce que l'alésage transversal (7) a un plus grand diamètre que l'alésage d'aspiration (3).

11. Fleuret selon l'une des revendications 1 à 6, caractérisé en ce que l'alésage d'aspiration (23) traverse le fleuret (21) en ligne droite sur toute la longueur de celui-ci et se termine sensiblement concentriquement à l'axe du fleuret dans la surface frontale de l'extrémité de tige cylindrique côté fixation.

12. Fleuret selon l'une des revendications 1 à 11, caractérisé en ce que la tige de fleuret (12) comporte une hélice de transport extérieure.

13. Fleuret selon l'une des revendications 1 à 12, caractérisé en ce que la tête de fleuret (8, 28) et la tige de fleuret (2, 22) ont sensiblement les mêmes diamètres extérieurs.

14. Fleuret selon l'une des revendications 1 à 13, dans lequel la surface frontale (14, 14') de la tête de fleuret se trouve dans une surface conique, caractérisé en ce que l'orifice d'entrée (15) se trouve au voisinage du bord extérieur de la surface frontale (14, 14') de la tête de fleuret (8).

FIG. 3

FIG. 4

FIG. 2

FIG. 1